## Europäisches Patentamt
## European Patent Office
## Office européen des brevets

(11) Veröffentlichungsnummer: **0 141 934**
**B1**

(12) # EUROPÄISCHE PATENTSCHRIFT

(45) Veröffentlichungstag der Patentschrift:
**22.06.88**

(51) Int. Cl.⁴: **H 04 Q 11/04, H 04 M 19/02**

(21) Anmeldenummer: **84109903.9**

(22) Anmeldetag: **20.08.84**

(54) **Schaltungsanordnung zur Erzeugung und Anschaltung der Rufsignalspannung für Teilnehmerstationen eines digitalen Zeitmultiplex-Fernsprechsystems.**

(30) Priorität: **23.08.83 DE 3330384**

(43) Veröffentlichungstag der Anmeldung:
**22.05.85 Patentblatt 85/21**

(45) Bekanntmachung des Hinweises auf die Patenterteilung:
**22.06.88 Patentblatt 88/25**

(84) Benannte Vertragsstaaten:
**AT BE CH DE FR GB IT LI NL SE**

(56) Entgegenhaltungen:
**GB - A - 2 102 249**

**PATENTS ABSTRACTS OF JAPAN, Band 6, Nr. 238(E-144)(1116), 26. November 1982 ; JP-A-57 136 855 (FUJITSU K.K.) 24.08.1982
THE INTERNATIONAL SYMPOSIUM ON SUBSCRIBER LOOPS AND SERVICES, NTG-FACHBERICHTE, München, 15.-19. September 1980, Band 73, VDE-Verlag GmbH, Berlin, DE; G.H. FLEISCHFRESSER et al.: "A study of various alternatives to provide digital techniques to the subscriber's loop"
NATIONAL TELECOMMUNICATIONS CONFERENCE, 30. November - 4. Dezember 1980, Band 3, Seiten 56.2.1 - 56.2.5, IEEE, New York, USA; R. SIRSI et al.: "A versatile integrated electronic line circuit"
ELECTRONICS INTERNATIONAL, Band 56, Nr. 6, März**

(56) Entgegenhaltungen: (Fortsetzung)
**1983, Seiten 116-120, New York, USA; F.H. CHERRICK et al.: "Two programmable ICs enhance line-card functionality"
ELECTRONICS INTERNATIONAL, Band 56, Nr. 4, Februar 1983, Seiten 115-119, New York, USA; S. BOOTMAN: "Telecommunications IC integrates still more line-card tasks"**

(73) Patentinhaber: **Siemens Aktiengesellschaft Berlin und München, Wittelsbacherplatz 2, D-8000 München 2 (DE)**

(72) Erfinder: **Lechner, Robert, Dipl.-Ing., Haidfeldstrasse 5, D-8156 Otterfing (DE)**
Erfinder: **Drescher, Manfred, Dipl.-Ing., Am Drudenbogen 2, D-8080 Fürstenfeldbruck (DE)**

## Beschreibung

Die Erfindung betrifft eine Schaltungsanordnung zur Erzeugung und Anschaltung der Rufsignalspannung für Teilnehmerstationen eines digitalen Zeitmultiplex-Fernsprechsystems, die jeweils an eine vorzugsweise integrierte mit einer wenigstens zweistufigen Verstärkerschaltung versehenen und über das Koppelfeld des Zeitmultiplex-Fernsprechsystems mit einem digitalen Tongenerator zur Erzeugung vermittlungstechnischer Hörsignale verbindbaren Teilnehmeranschlussschaltung angeschlossen sind.

Bei Fernsprechsystemen der obenbezeichneten Art ist neben dem genannten mehreren Teilnehmeranschlussschaltungen gemeinsamen digitalen Tongenerator ein ebenfalls zentral vorgesehener Rufstromgenerator vorhanden, der entweder mit Hilfe von teilnehmerschaltungsindividuellen Anschalterelais oder mit Hilfe eines Signalmultiplexers mit den Teilnehmeranschlussschaltungen verbindbar ist.

Eine solche Rufkonzeption stellt eine zufriedenstellende Lösung dar, solange an die Rufsignalerzeugung nur die bisher üblichen Anforderungen gestellt werden.

Da in den verschiedenen Ländern unterschiedliche Frequenzen des Rufsignals gefordert werden, besteht allerdings ein Interesse an einer Lösung, die in einfacher Art eine Anpassung an die jeweiligen individuellen Erfordernisse gestattet.

Bei Fernsprechsystemen mit sogenannten Partylines, bei denen eine Mehrzahl von Teilnehmerstationen an eine gemeinsame Übertragungsleitung angeschlossen ist und ohne Zutun einer Vermittlung jeder Teilnehmer sich an einer über diese Verbindungsleitung abgewickelten Gesprächsverbindung beteiligen kann, ist die Möglichkeit eines Selektivrufs erwünscht, d.h. jedem der angeschlossenen Teilnehmer soll eine individuelle Rufsignalfrequenz zugeordnet werden, so dass die Teilnehmer gezielt gerufen werden können.

Eine Möglichkeit bei moderneren Fernsprechvermittlungsanlagen besteht in der Aussendung eines Warnsignals mit hohem Pegel dann wenn ausserhalb einer im Aufbau befindlichen oder bestehenden Fernsprechverbindung der Hörer der Teilnehmerstation nicht aufgelegt ist (Howlertone).

Die Aufgabe der vorliegenden Erfindung besteht daher darin, ein Rufsignalkonzept anzugeben, das sämtlichen der genannten Anforderungen gerecht wird.

Erfindungsgemäss wird die Aufgabe mit einer Schaltungsanordnung der obengenannten Art gelöst, die dadurch gekennzeichnet ist, dass der digitale Tongenerator zur Erzeugung auch der Rufspannungssignale und weiterer nicht vermittlungstechnischer Hörtonsignale ausgestattet ist, dass die Eingangsstufe der Verstärkerschaltung einer jeden Teilnehmeranschlussschaltung zwischen verschiedenen Verstärkungsgraden umschaltbar ist, von denen einer bei der Sprachsignalverstärkung und der Verstärkung vermittlungstechnischer Hörtonsignale und die anderen bei der Rufsignalverstärkung und Verstärkung der weiteren nicht vermittlungstechnischen Hörtonsignale wirksam ist, und dass für die Ausgangsstufe der Verstärkerschaltungen jeweils den Verstärkungsgraden bzw. den bei diesen Verstärkungsgraden verstärkten Signalen entsprechende verschiedene Vorspannungen wirksam schaltbar sind.

Die erfindungsgemässe Schaltungsanordnung stellt ein Konzept dar, das ohne grossen Aufwand die Anpassbarkeit an spezifische Forderungen an die Rufsignalfrequenz in verschiedenen Ländern gestattet. Ein digitaler Tongenerator, wie er erfindungsgemäss zur Erzeugung der Rufsignalspannung herangezogen wird, lässt sich nämlich ohne wesentliche Vorleistungen so ausgestalten, dass er zur Abgabe von Rufsignalen verschiedener Frequenzen in der Lage ist, wie auch die Verlagerung der Rufsignalerzeugung neben der Erzeugung vermittlungstechnischer Hörtonsignale auf einen solchen Tongenerator keinen besonderen Mehraufwand darstellt.

Damit kann aber auch im Fall eines Fernsprechsystems mit Selektivruf dem Erfordernis der Erzeugung und Anschaltung verschieden frequenter Rufsignale sowie der Erzeugung und Anschaltung von dem Rufsignal vergleichbaren Signalen wie dem erwähnten Howlertone Rechnung getragen werden, ohne dass beispielsweise signalindividuelle Anschalterlais vorgesehen sein müssen. Auch die übrigen in Durchführung des erfindungsgemässen Konzepts erforderlichen die Verstärkerschaltungen der Teilnehmeranschlussschlatungen betreffenden Massnahmen erfordern nur einen geringen technischen Mehraufwand.

Was die bei der erfindungsgemässen Schaltungsanordnung vorgesehene Schaltbarkeit der Verstärkung in Abhängigkeit von der Art des Signals anbelangt, so wird von einem Prinzip Gebrauch gemacht, wie es für sich aus den Patents-Abstracts of Japan, Band 6 Nr. 238 (E–144) (1116), 26. November 1982 bekannt ist. Entsprechendes gilt für das Merkmal der Wirksamschaltung unterschiedlicher Vorspannungen der Verstärkerstufe, die auch bei einer aus der GB-A-2 102 249 bekannten Teilnehmeranschlussschaltung vorgesehen ist.

Nachstehend wird die Erfindung anhand eines Ausführungsbeispiels unter Bezugnahme auf eine Zeichnung näher erläutert.

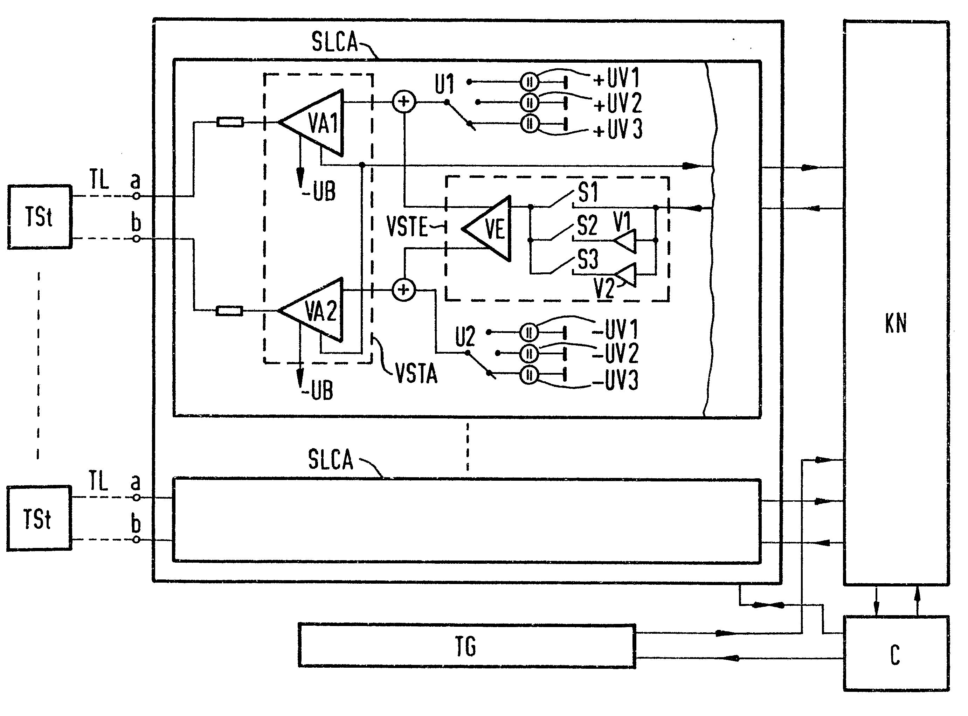

Die Zeichnung zeigt im zum Verständnis der Erfindung erforderlichen Umfang einen Teil einer digitalen Zeitmultiplex-Fernsprechvermittlungsstelle, an die Teilnehmerstationen TSt über Teilnehmeranschlussleitungen TL angeschlossen sind.

Jeder der Teilnehmerstationen ist in der dargestellten Vermittlungsstelle eine Teilnehmeranschlussschaltung SLCA zugeordnet, in der teilnehmerindividuelle Einrichtungen für die Teilnehmerspeisung, den Überspannungsschutz, die Signalisierung die Analog-Digital-Wandlung bzw. Digital-Analog-Wandlung, die Zweidraht-Vierdraht-Umsetzung und die Prüfung enthalten sind.

In der vorliegenden Darstellung sind von diesen Einrichtungen lediglich eine Gabelschaltung für die Zweidraht-Vierdrahtübergang dargestellt, und zwar in Form einer Verstärkerschaltung mit einer Eingangsstufe VSTE, die einen Verstärker VE enthält und einer Ausgangsstufe VSTA, die Verstärker VA1 und VA2 enthält.

Der Verstärker VE der Eingangsstufe VSTE ist zwischen verschiedenen Verstärkungsgraden umschaltbar, was hier durch eine Schalteranordnung mit den Schaltern S1 bis S3 und Verstärkern V1 und V2 zum Ausdruck gebracht ist, über die ankommende Signale entweder direkt oder über einen der Verstärker V1 oder V2 an den Verstärker gelangen können und demnach zu unterschiedlich verstärkten Ausgangssignalen führen. Der kleinste Verstärkungsgrad der Eingangsverstärkerstufe ist wirksam geschaltet, wenn für die Teilnehmerstationen bestimmte Sprachsignale oder vermittlungstechnische Hörtonsignale verstärkt werden sollen. Ein demgegenüber grösserer Verstärkungsgrad, symbolisiert durch das wirksam Schalten des Verstärkers V1, ist dem schon genannten, das Vorliegen eines nicht aufgelegten Hörers bei der betreffenden Teilnehmerstation ausserhalb einer Verbindung anzeigenden Signal zugeordnet. Der grösste Verstärkungsgrad S3, V2 schliesslich ist dem Rufsignal zugeordnet. Bei Bedarf könnte die Umschaltbarkeit Verstärkung noch auf andere Verstärkungsgrade erweitert sein.

Bei den Verstärkern VA1 und VA2 der Ausgangsstufe VSTA der Verstärkerschaltung, die jeweils eine der Adern a und b der Teilnehmeranschlussleitung TL abschliessen, sind im dargestellten Fall drei verschiedene Vorspannungen schaltbar, was durch die Umschalter U1 und U2 sowie durch Vorspannungsquellen +UV1 bis +UV3 bzw. −UV1 bis −UV3, die wahlweise über die Umschalter U1 bzw. U2 angeschaltet werden können, symbolisiert ist. Die drei Vorspannungen sind jeweils einem der genannten Verstärkungsgrade der Eingangsstufe VSTE bzw. einem der bei diesen Verstärkungsgraden zu verstärkenden Signalen zugeordnet.

Die bei der Verstärkung der Sprachsignale und vermittlungstechnischen Hörtonsignale wirksame Vorspannung ist so klein, wie es aufgrund der Aussteuerung der Ausgangsstufe der Verstärkerschaltung durch diese Signale gerade nötig ist, so dass die in dieser Verstärkerstufe entstehende Verlustleistung auf einem Minimalwert gehalten werden kann.

Im Falle der Verstärkung der Rufsignalspannung, die mit wesentlich grösserer Amplitude an die Endstufe der Verstärkerschaltung gelangt ist die Vorspannung so gross, dass ein ausreichend grosser Aussteuerbereich vorhanden ist. Es kann damit gewährleistet werden, dass im Falle des Rufs auf den Adern a und b der Teilnehmeranschlussleitung TL neben der eigentlichen Rufsignalwechselspannung eine definierte Gleichspannungskomponente erhalten bleibt. Die ist erforderlich, da sonst eine Schleifenschlussindikation in der Rufphase nicht vorgenommen werden kann und damit auch kein Kriterium für die Rufabschaltung vorliegt, die jedoch besonders schnell vorgenommen werden können muss, um zu verhindern, dass der bei geschlossener Teilnehmerschleife über den Mikrofonstromkreis fliessende Rufwechselstrom zu einer Zerstörung des Mikrofons in der Teilnehmerstation führt.

Die dargestellte Anordnung zeigt ferner einen digitalen Tongenerator TG, der in Abweichung entsprechender Einrichtungen bei bekannten Fernsprechvermittlungssystemen neben der Erzeugung der vermittlungstechnischen Hörtonsignale auch zur Erzeugung eines Rufsignals bzw. weiterer nicht vermittlungstechnischer Hörtonsignale wie z.B. das genannte Howlertones ausgestattet ist. Die Erzeugung der digitalen Töne erfolgt dadurch, dass verschiedenen Amplitudenwerten einer Sinusschwingung entsprechende eingespeicherte PCM-Worte periodisch ausgelesen werden, wobei unterschiedliche Tonfrequenzen dadurch erzeugt werden, dass je nach Bedarf aus einem Wertevorrat von PCM-Wörtern, deren aufeinanderfolgendes Auslesen im Abstand von einer Abtastperiode, hier also 125 µs einem 1 HZ-Ton entspricht, durch Auslassen von mehr oder weniger PCM-Wörtern dieses Wertevorrats bei Auslesen gebildet werden.

Im Bedarfsfall z.B. in der Rufphase wird zwischen dem Tongenerator TG und einer Teilnehmeranschlussschaltung SLCA über das Koppelnetz KN der Vermittlungsstelle unter dem Einfluss der Steuerung C eine Verbindung hergestellt, über die die ausgelesenen PCM-Worte und damit auch die zur Bildung des Rufsignals dienenden an die Teilnehmeranschlussschaltung gelangen, wo sie einer Digital-Analog-Wandlung unterworfen werden. Die entsprechende Analogspannung wird dann bevor sie über die Teilnehmeranschlussleitung TL an die Teilnehmerstation TSt gelangt, durch die erläuterte Verstärkerschaltung verstärkt, bei der der entsprechende Verstärkungsgrad in der Eingangsstufe VSTE bzw. die entsprechende Vorspannung in der Ausgangsstufe VSTA wirksam geschaltet sind.

**Patentansprüche**

1. Schaltungsanordnung zur Erzeugung und Anschaltung der Rufsignalspannung für Teilnehmerstationen (TSt) eines digitalen Zeitmultiplex-Fernsprechsystems, die jeweils an eine vorzugsweise integrierte mit einer wenigstens zweistufigen Verstärkerschaltung (VSTE, VSTA) versehenen und über das Koppelfeld (KN) des Zeitmultiplex-Fernsprechsystems mit einem digitalen Tongenerator (TG) zur Erzeugung vermittlungstechnischer Hörtonsignale verbindbaren Teilnehmeranschlussschaltung (SLCA) angeschlossen sind, dadurch gekennzeichnet, dass der digitale Tongenerator (TG) zur Erzeugung auch der Rufsignale und weiterer nicht vermittlungstechnischer Hörtonsignale ausgestattet ist, dass die Eingangsstufe (VSTI) der Verstärkerschaltung einer jeden Teilnehmeranschlussschaltung (SLCA) zwischen verschiedenen Verstärkungsgraden umschaltbar ist, von denen einer bei der Sprachsignalverstärkung und der Verstärkung vermittlungstechnischer Hörtonsignale und der andere bei der Rufsignalverstärkung und Verstärkung weiterer nicht vermittlungstechnischer Hörtonsignale wirksam ist, und dass für die Ausgangsstufe (VSTA) der Verstärkerschaltungen jeweils den Verstärkungsgraden bzw. den bei diesen Verstärkungsgraden verstärkten Signalen entsprechende, verschiedene Vorspannungen (UV1 bis UV3) wirksam schaltbar sind.

2. Schaltungsanordnung nach Anspruch 1, dadurch gekennzeichnet, dass der digitale Tongenerator (TG) zur Abgabe eines bei nicht aufgelegtem Hörer bei einer der Teilnehmerstationen (TSt) an diese Teilnehmerstationen auszusendenden Signaltons ausgestattet ist, und dass die Eingangsstufen (VSTE) und Ausgangsstufen (VSTA) der Verstärkerschaltungen der Teilnehmeranschlussschaltungen (SLCA) jeweils eine diesem Signalton entsprechende schaltbare Verstärkung (S1–S3) bzw. schaltbare Vorspannung (UV1–UV3) aufweisen.

3. Schaltungsanordnung nach Anspruch 1 oder 2, dadurch gekennzeichnet, dass die für die Verstärkungsumschaltung erforderlichen Schaltsignale und/oder die entsprechenden Vorspannungen unter Verwendung eines einstellbaren Digital-Analog-Wandlers erzeugt werden.

## Revendications

1. Montage pour produire et appliquer la tension de signal d'appel à des postes d'abonnés (TSt) d'un système de téléphonie numérique à multiplexage temporel, qui sont raccordés respectivement à un circuit de raccordement d'abonné (SLCA) de préférence intégré, équipé d'un circuit amplificateur (VSTE, VSTA) comportant au moins deux étages, et pouvant être relié par l'intermédiaire du champ de couplage (KN) du système de téléphonie à multiplexage temporel à un générateur numérique de tonalités (TG) servant à produire des signaux de tonalité audibles utilisés pour la technique de commutation, caractérisé par le fait que le générateur numérique de tonalités (TG) est équipé pour produire également des signaux d'appel et d'autres signaux de tonalité audibles non utilisés pour la technique de commutation, que l'étage d'entrée (VSTI) du circuit amplificateur de chaque circuit de raccordement d'abonné (SLCA) peut être commuté entre différents degrés d'amplification, dont l'un est actif lors de l'amplification de signaux vocaux et lors de l'amplification de signaux de tonalité audibles utilisés pour la technique de commutation, et dont l'autre est actif lors de l'amplification de signaux d'appel et de l'amplification d'autres signaux de tonalité audibles non utilisés pour la technique de commutation, et que différentes tensions de polarisation (UV1 à UV3), qui correspondent respectivement aux degrés d'amplification ou aux signaux amplifiés avec ces degrés d'amplification, peuvent être rendues actives pour l'étage de sortie (VSTA) des circuits amplificateurs.

2. Montage suivant la revendication 1, caractérisé par le fait que le génératuer numérique de tonalités (TG) est équipé pour réaliser la délivrance d'un signal de tonalité qui, dans le cas où l'écouteur n'est pas raccroché dans l'un des postes d'abonnés (TSt), doit être envoyé à ces postes d'abonnés, et que les étages d'entrée (VSTE) et les étages de sortie (VSTA) des circuits amplificateurs des circuits de raccordement d'abonnés (SLCA) possèdent respectivement une amplification commutable (S1–S3) ou une tension de polarisation commutable (UV1–UV3) correspondant à ce signal de tonalité.

3. Montage suivant la revendication 1 ou 2, caractérisé par le fait que les signaux de commutation nécessaires pour la commutation de l'amplification et/ou les tensions de polarisation correspondantes sont produites moyennant l'utilisation d'un convertisseur numérique/analogique réglable.

## Claims

1. A circuit arrangement for generating and connecting the ringing signal voltage for subscriber stations (TSt) of a digital t.d.m. telephone system which are each connected to a preferably integrated subscriber line circuit (SLCA) which is provided with an at least two-stage amplifier circuit (VSTE, VSTA) and which can be connected via the switching network (KN) of the t.d.m. telephone system to a digital tone generator (TG) for the generation of switching-orientated audible tone signals, characterised in that the digital tone generator (TG) is also equipped to generate the ringing signals and other non-switching-orientated audible tone signals, that the imput stage (VSTI) of the amplifier circuit of each subscriber line circuit (SLCA) can be switched over between different degrees of amplification, of which one is operative for the speech signal amplification and the amplification of switching-orientated audible tone signals and the other is operative for the ringing signal amplification and the amplification of other non-switching-orientated audible tone signals, and that different bias voltages (UV1 to UV3), respectively corresponding to the degrees of amplification and to the signals amplified at these degrees of amplification can be activated for the output stage (VSTA) of the amplifier circuits.

2. A circuit arrangement as claimed in claim 1, characterised in that the digital tone generator (TG) is equipped to emit a signal tone which, when the receiver at one of the subscriber stations (TSt) is not replaced, is to be transmitted to the subscriber stations, and that the input stages (VSTE) and output stages (VSTA) of the amplifier circuits of the subscriber line circuits (SLCA) each exhibit a switchable degree of amplification (S1–S3) and switchable bias voltage (UV1–UV3) corresponding to this signal tone.

3. A circuit arrangement as claimed in claim 1 or 2, characterised in that the switching signals required for the amplification switch-over and/or the corresponding bias voltages are generated using an adjustable digital-analogue converter.